(19) **Europäisches Patentamt European Patent Office Office européen des brevets**

(11) **EP 4 752 794 A1**

(12) **EUROPEAN PATENT APPLICATION**

(43) Date of publication:
03.06.2026 Bulletin 2026/23

(21) Application number: 24216666.8

(22) Date of filing: 29.11.2024

(51) International Patent Classification (IPC):
$G06Q\ 10/04^{(2023.01)}$ $G06Q\ 50/06^{(2024.01)}$

(52) Cooperative Patent Classification (CPC):
G06Q 10/04; G06Q 50/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventors:
• **HESS, Martin**
**31-201 Krakow (PL)**
• **DAWIDOWSKI, Pawel**
**32-010 Luczyce (PL)**
• **GIUNTOLI, Marco**
**64521 Groß-Gerau (DE)**
• **BASHIR BUGAJE, Al-Amin**
**Outremont, H2V 2V2 (CA)**

(74) Representative: **Vossius & Partner**
**Patentanwälte Rechtsanwälte mbB**
**Siebertstraße 3**
**81675 München (DE)**

(54) **METHODS, DEVICE AND STORAGE MEDIUM FOR OPTIMIZING POWER FLOW IN POWER NETWORKS**

(57) The present disclosure relates to a method for optimizing power generation in a power network using Benders decomposition, the method comprising performing one or more iterations of the following steps: a) determining a solution for each master problem, $MP_i$, of a plurality of master problems, wherein each $MP_i$ is based on a different slack weight, $w_i$, of a plurality of slack weights; b) selecting a slack weight $w_i$ based on a first predetermined condition; c) selecting the solution for the $MP_i$ that corresponds to the selected $w_i$ as an input for one or more subproblems; d) determining one or more solutions for the one or more subproblems; and e) when a second predetermined condition is met, inputting the determined one or more solutions of the one or more subproblems of step d) into each $MP_i$ of step a) of the subsequent iteration.

Fig. 1

EP 4 752 794 A1

**Description**

**Field of the invention**

The present disclosure relates to methods, devices, and systems for optimizing power flow in power networks.
In particular, the disclosure relates to methods, devices, and systems for security-constrained power flow in power networks based on Benders decomposition and a heuristic slack weight selection and adjustment.

**Technical background**

In power networks, a wide and diverse range of factors affect their performance. These factors comprise, among others, power network system losses, load balancing requirements, security and reliability requirements, and power generation efforts.
System losses comprise energy losses during power generation, power transmission, and power distribution, and energy losses due to technical aspects on a power consumer side. Load balancing requirements in power networks aim at balancing power generation and power demand across a power network to prevent overloads and underutilization at parts of the power network. Security and reliability requirements ensure that the power network is operated under normal operation conditions and remains secure and stable even during contingencies caused by, e.g., equipment failure and faults. Meanwhile, power generation efforts can be determined based the used power generation technology, power generation location, and economic aspects of power generation.
Optimal power flow, OPF, is a method for optimizing performance of a power network via optimization of generator power and voltage setpoints to optimize the effects of system losses and power generation efforts. OPF typically solves a nonlinear program, NLP, posed by active and reactive power balance, and the constraints in active power, reactive power, voltage and angle deviations under minimization of the power generation effort.
Security-constrained optimal power flow, SCOPF, represents a specific type of OPF that determines optimal power flow such that the power network can continue to operate safely and reliably in case of an $N$ - $1$ contingency scenario in which the power network suffers the loss of a single network element, such as, e.g., a transmission line, generator, or transformer. The $N$ - $1$ scenario creates additional optimization constraints in that the power balance and current limits need to be maintained in the $N$ - $1$ scenario. While it is possible to generalize the contingency scenario to $N$ - $x$ scenarios, the computational complexity becomes prohibitively high when considering all possible branch combinations.
The optimization problem posed by SCOPF can be solved using hard constraints, in which the power balance and current limits are strictly enforced. However, in such as case, it is not guaranteed that a solution exists which satisfies the hard constraints. Additionally, or alternatively, soft constraints can be introduced via slack variables. Slack variables introduce additional terms in the objective function of the posed optimization problem and penalize violations of the power balance and current limit constraints. Here, the choice of slack weights is paramount to having low computation times and deriving a solution to the posed optimization problem with minimal violation of constraints. However, it is generally not feasible to determine optimized slack weights a priori.
It is therefore an objective of the present disclosure to provide improved slack weight based SCOPF with reduced computation times and computational complexity.

**Summary of the invention**

The above objective is achieved by the features of the present disclosure.
In an aspect, the present disclosure relates to a computer-implemented method for optimizing power generation in a power network using Benders decomposition, the method comprising performing one or more iterations of the following steps:

a) determining a solution for each master problem, $MP_i$, of a plurality of master problems, wherein each $MP_i$ is based on a different slack weight, $w_i$, of a plurality of slack weights;

b) selecting a slack weight $w_i$ based on a first predetermined condition;

c) selecting the solution for the $MP_i$ that corresponds to the selected $w_i$ as an input for one or more subproblems;

d) determining one or more solutions for the one or more subproblems; and

e) when a second predetermined condition is met, inputting the determined one or more solutions of the one or more subproblems of step d) into each $MP_i$ of step a) of the subsequent iteration.

Known Benders decomposition of the prior art generally breaks down a posed optimization problem into a master problem and one or more subproblems to reduce the computational complexity of the posed optimization problem. The present disclosure improves on known Benders decomposition by providing a method in which a plurality of master problems is determined. By determining a plurality of master problems that are each based on a different slack weight, and by selecting a slack weight and the solution to the corresponding master problem as inputs to the one or more subproblems based on a predetermined condition, an optimized selection of slack weights for each iteration of the Benders decomposition can be performed. This provides reduced computational complexity, computation times, and, at the same time, improved solutions to the posed optimization problem.

According to preferred embodiments, the plurality of slack weights comprises or substantially consist of slack weights $w_i$ that lie within a slack weight range between a lower limit and an upper limit respectively defined by an initial slack weight, $w$, and a spread factor $s$. For subsequent iterations of steps a) to e), initial slack weight $w$ corresponds to the slack weight $w_i$ selected in step b) of the previous iteration.

This limits the range of values which the slack weights can assume, and the number of slack weights from which a slack weight can be chosen from based on the predetermined first condition and allows to prevent high computation times during slack weight selection.

According to preferred embodiments, in b), a respective slack weight $w_i$ is chosen when a relative or absolute difference between its corresponding slack variable $l_i$ and the corresponding slack variable $l_{i+1}$ of the neighboring larger slack weight $w_{i+1}$ is below a predefined threshold.

Typically, slack variables decrease with increasing slack weights. However, it is observed that at a certain slack weight, a further increase in slack weight is met with diminishing returns, i.e., a reduced decrease in slack variable. The applicant has found that it is most beneficial to select a slack weight where slack variables begin to plateau for changing slack weights.

According to preferred embodiments, the plurality of slack weights comprises or substantially consists of slack weights $w_i$ that are spaced according to a predetermined rule.

This simplifies slack weight selection and reduces computational complexity.

According to preferred embodiments the predetermined rule comprises a logspace function that spaces slack weights $w_i$ evenly on a logarithmic scale.

This allows to dynamically and efficiently scale the plurality of slack weights across a wide range of values to decrease computational complexity.

According to preferred embodiments the plurality of slack weights comprises the following slack weights:

$$w_1 \leftarrow sw$$

$$w_2 \leftarrow 10^{0.5(log_{10}(w)+\log_{10}(sw))}$$

$$w_3 \leftarrow w$$

$$W_4 \leftarrow 10^{0.5\left(log_{10}(w)+log_{10}\left(\frac{w}{s}\right)\right)}$$

$$w_5 \leftarrow \frac{w}{s}$$

This spacing of slack values was found to be particularly computationally efficient.

According to preferred embodiments, the first predetermined condition in b) is:

$$\text{if } l_i \ < \beta \cdot l_{i+1}, \text{then } w \leftarrow w_i;$$
$$\text{else if } l_{i+1} \ < \beta \cdot l_{i+2}, \text{then } w \leftarrow w_{i+2};$$
$$...$$
$$\text{else } w \leftarrow w_k;$$

wherein $k$ is the total number of slack weights $w_i$ and is preferably an odd number, and wherein $\beta$ is a scalar factor. Scalar factor $\beta$ is preferably in a range of 0 to 5, preferably in a range of 0.1 to 0,4, more preferably in a range of 0.2 to 0.3, most preferably 0.25.

By setting $k$ as an odd number, it can be prevented that slack weight selection between subsequent iterations of the Benders decomposition oscillates between two slack weights. By setting an appropriate value for $\beta$, sudden decreases in slack variable with increasing slack weights can be determined. By appropriately setting both $k$ and $\beta$, slack weight selection can be performed with improved computation times.

According to preferred embodiments, the total number $k$ of slack weights $w_i$ of the plurality of slack weights is determined based on available parallel computing capacity. This allows steps a) to c) to make use of parallel computing capacity reserved for the one or more subproblems of the Benders decomposition of step d) that would otherwise be wasted when determining and solving only a single master problem for a typical Benders decomposition of the prior art.

According to preferred embodiments, each $MP_i$ is based on a power generation effort, power balance, and current limits of the power network.

According to preferred embodiments, the one or more subproblems are based on one or more of: active power constraints of one or more buses of the power network, reactive power constraints of one or more buses of the power network, voltage constraints of one or more branches of the power networks, slack variables of the one or more subproblems, and/or an $N\text{-}1$ security criterion.

This allows the method according to the present disclosure to accurately reflect power generation networks.

According to preferred embodiments, the second predetermined condition is met when a predetermined number of iterations of steps a) to d) is below a predefined threshold. Additionally, or alternatively, the second predetermined condition is met when, in an iteration, a difference between a lower bound, provided by the solution of the master problem selected in c), and one or more upper bounds, provided by the one or more solutions determined for the one or more subproblems in d), is above a predefined threshold.

This allows to limit the number of iterations of the method according to the present disclosure and reduces computational complexity and computation time.

According to preferred embodiments, when the plurality of slack weights comprises or substantially consist of slack weights $w_i$ that lie within a slack weight range between a lower limit and an upper limit respectively defined by an initial slack weight, $w$, and a spread factor $s$, for each iteration of steps a) to d), spread factor $s$ is decreased by a predetermined factor. When s is below a predetermined threshold, in subsequent iterations, in step a), the plurality of master problems is reduced to a single master problem with a final slack weight $w_f$ as an input to the one or more subproblems in step d), and steps b) and c) are omitted.

By reducing the spread factor for each iteration, the possible range of values for slack weights and slack weight selection is reduced for each iteration. This allows to fine-tune slack weight selection for each iteration for improved OPF.

According to preferred embodiments the number of master problems $MP_i$ is equal to or smaller than the number of subproblems.

This ensures that steps a) to c) for the plurality of master problems do not require more computing resource than reserved for the one or more subproblems of step d).

According to preferred embodiments, the one or more subproblems are allocated to one or more first computing cores, and wherein one or more $MP_i$ of the plurality of master problems are allocated to one or more second computing cores. According to further preferred embodiments, the one or more first computing cores correspond to the one or more second computing cores.

This allows computing cores reserved for the one or more subproblems of step d) to be used for the plurality of master problems of steps a) to c) and thus not be idly wasted. This also allows seamless integration in existing OPF parallelized workflows without increase in overall computation time.

In another aspect, the present disclosure relates to a computing device comprising one or more processors configured to perform a method according to any one of the above described embodiments.

In yet another aspect, the present disclosure relates a computer program product comprising instructions that, when executed by a computing device according to an above-described aspect, cause the computing device to perform a method according to any one of the above described embodiments.

In yet another aspect, the present disclosure relates a computer-readable storage medium comprising a computer program product comprising instructions that, when executed by a computing device according to an above-described aspect, cause the computing device to perform a method according to any one of the above described embodiments.

Other aspects, features, and advantages will be apparent from the summary above, as well as from the description that follows, including the figures and the claims.

Embodiments of the present disclosure will now be described by way of example only and with reference to the following accompanying drawings. In the figures, the same reference numerals denote the same or similar elements.

**Brief description of the drawings**

Fig. 1 shows a flow chart illustrating a method according to embodiments of the present disclosure.

Fig. 2 shows a diagram illustrating a method according to embodiments of the present disclosure.

Fig. 3 shows a heatmap illustrating computation times for embodiments of the present disclosure.

Fig. 4 shows a heatmap illustrating computation times for embodiments of the present disclosure.

Fig. 5 shows a heatmap illustrating computation times for embodiments of the present disclosure.

Fig. 6 shows a heatmap illustrating computation times for embodiments of the present disclosure.

Fig. 7 shows a heatmap illustrating computation times for embodiments of the present disclosure.

Fig. 8 shows a heatmap illustrating computation times for embodiments of the present disclosure.

**Detailed description**

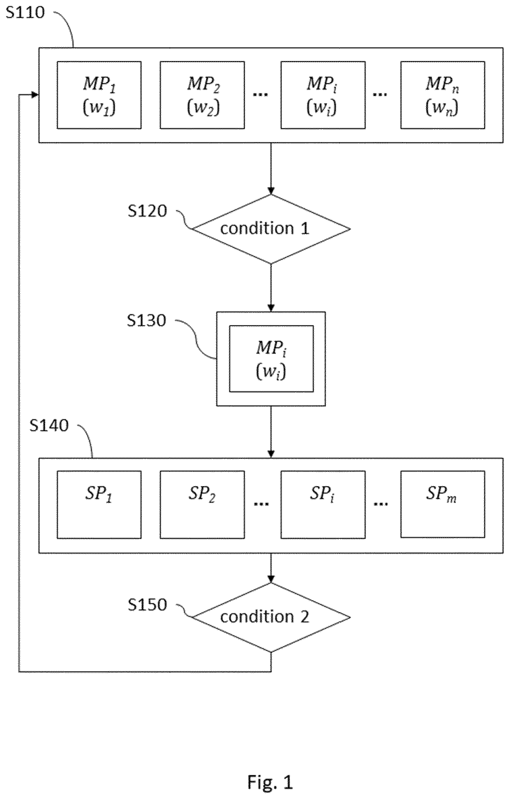

Fig. 1 illustrates a method for optimal power flow according to embodiments of the present disclosure using Benders decomposition and slack weights.

In a first step **S110**, a plurality of master problems is determined and solved, wherein each master problem $MP_i$ is based on a different slack weight $w_i$ of a plurality of slack weights. Each master problem $MP_i$ may be determined and solved as described below.

First, a holistic OPF base case formulation is determined, which may be abbreviated and simplified using the following expression:

$$\min_{p_g, q_g, |V_i|, \theta_i, s_i^k, I_b} \left( \frac{1}{n} \sum_{g \in \mathcal{G}} c_g' p_g + \sum_{i \in \mathcal{B}_u, k \in \{1,2,3,4\}} w^p s_i^k + \sum_{b \in \mathcal{B}_r} w^c I_b \right) \tag{1a}$$

subject to

$$P_i + s_i^1 - s_i^2 = |V_i| \sum_{k=1}^{n} |V_k|(G_{ik} \cos(\theta_i - \theta_k) + B_{ik} \sin(\theta_i - \theta_k)) + p_i \tag{1b}$$

$$Q_i + s_i^3 - s_i^4 = |V_i| \sum_{k=1}^{n} |V_k|(G_{ik} \sin(\theta_i - \theta_k) - B_{ik} \cos(\theta_i - \theta_k)) + q_i \tag{1c}$$

$$\alpha_b^1 |V_i|^2 + \alpha_b^2 |V_k|^2 + 2|V_i||V_k|(\alpha_b^3 \cos(\theta_i - \theta_k) + \alpha_b^4 \sin(\theta_i - \theta_k)) - I_b \leq c_b^{lim} \tag{1d}$$

$$s_i^1, s_i^2, s_i^3, s_i^4, I_b \geq 0 \tag{1e}$$

As can be seen, the posed minimization problem is minimized over the active power at the generator buses $p_g$ of the power network, reactive power at the generator buses $q_g$ of the power network, voltage magnitude at respective buses $|V_i|$, voltage angle at respective buses $\theta_i$, a power-balance slack $s_i^k$, and a current limit slack $I_b$. The set $\mathcal{G}$ is the set of all generator buses and is a subset of the set of all buses $\mathcal{B}_u$. The set of all branches of the power network is denoted $\mathcal{B}_r$. The cardinality of $\mathcal{G}$ is denoted $n$, the linear power generation effort $c_g'$, the power-balance slack weight $w^p$ and the current limit slack weight $w^c$.

The first term in (1a) - $\frac{1}{n} \sum_{g \in \mathcal{G}} c_g' p_g$ - represents the power generation effort. In some embodiments, the power generation effort is associated with or substantially corresponds to the so-called economic dispatch that serves to determine the the most cost-effective allocation of power generation across available generators buses to satisfy system load demands while meeting operational constraints.

The second term in (1a) - $\sum_{i \in \mathcal{B}_u, k \in \{1,2,3,4\}} w^p s_i^k$ - represents power-balance slack, and the third term in

(1a) - $\sum_{b \in \mathcal{B}_r} w^c l_b$ - represents current limit slack.

The constraint (1b) represents the power balance equation for the active power. It is defined for all buses i. The active power demand $P_i$ is a given parameter. The terms $G_{ik}$ and $B_{ik}$ correspond to the real and imaginary parts of the $(i, k)$ entries of admittance matrix and are zero if there is no branch connecting bus i and bus k. If the bus i is not a generator bus, then $p_i$ is zero.

The constraint (1c) represents the power balance equation for the reactive power. It is defined for all buses i. The reactive power demand $Q_i$ is a given parameter. The terms $G_{ik}$ and $B_{ik}$ correspond to the real and imaginary parts of the $(i, k)$ entries of admittance matrix as in (1b) and are zero if there is no branch connecting bus i and bus k. If the bus i is not a generator bus, then $q_i$ is zero.

The constraint (1d) is the branch current bound, which limits the voltage on branch b to $c_b^{lim}$. Nodes i and k are the nodes connected by branch b. Parameters $\alpha_b^k$ are provided parameters.

It is to be noted that the above expressions (1a) - (1d) represent an exemplary and simplified presentation of OPF. Other formulations and representations of OPF can be employed by the skilled person according to specifics of a given power network within the scope of methods according to the present disclosure. For example, additional terms and constraints can be added for current limits to distinguish between currents from a node and to a node, or for limits on the angle deviation. General aspects of OPF are considered known to the skilled person [1, 2, 3] and are not discussed in detail.

Expressions (1a) - (1e) use so-called soft constraints on the power balance equations and current limits due to the use of slack variables. The OPF formulation with hard constraints can be derived by omitting the slack variables

$s_i^1, s_i^2, s_i^3, s_i^4$ and $l_b$. Hard constraints mean that the power balance and current limits need to be strictly enforced, while soft constraints used by methods of the present disclosure allow for violations which are penalized via the objective functions.

In a soft-constrained solution according to methods of the present disclosure, violations of the power balance and violation of current limits can be balanced against the power generation efforts. Slack weights $w_i$ determine how the different quantities are compared and weighed against each other.

For SCOPF, contingencies are considered, i.e., cases where network elements of the power network such as, e.g., power generator, transmission line, or an entire branch become unavailable. For SCOPF, expressions (1a) - (1e) are modified by additional constraints for the contingency cases. The active and reactive power at generator buses is shared between the OPF base case and SCOPF contingency cases. The power generation effort may remain unchanged, but accounting for contingencies introduces additional slack variables into the objective function.

The above described SCOPF is solved with a Benders decomposition using soft constraints by introducing appropriate slack variables. The Benders decomposition generally selects some of the variables as complicating variables and projects them out. This results in a master problem and a plurality of subproblems, providing lower bounds and upper bounds on the objective value, respectively. An iterative procedure improves the bounds by adding feasibility and optimality cuts to the formulation.

For an optimization problem of the following form, using notation from [4] the following expression can be obtained:

$$\min_{x,y} f(x, y) \qquad\qquad (2a)$$

$$\text{s.t.} \quad c(x) \leq 0 \qquad\qquad (2b)$$

$$d(x, y) \leq 0 \qquad\qquad (2c)$$

with $x \in \mathbb{R}^n, y \in \mathbb{R}^m, f(x, y): \mathbb{R}^n \times \mathbb{R}^m \to \mathbb{R}, c(x): \mathbb{R}^n \to \mathbb{R}^p$ and $d(x, y): \mathbb{R}^n \times \mathbb{R}^m \to \mathbb{R}^q$.

The variables x are called complicating variables and fixing them renders the problem into a simpler and decomposable form. Introducing the auxiliary function $\alpha(x)$ yields

$$\min_{y} f(x, y) := \alpha(x) \qquad (3a)$$

$$\text{s.t. } d(x, y) \leq 0 \qquad (3b)$$

Auxiliary function $\alpha(x)$ expresses the objective function of the original problem as a function of only the complicating variables.

The original function can be expressed as original problem

$$\min_{x} \alpha(x) \qquad (4a)$$

$$\text{s.t. } c(x) \leq 0 \qquad (4b)$$

which allows to formulate an iterative procedure to solve the original problem as follows.

First, fix complicating variables to specific values $x = x^{(v)}$ such that $c(x^{(v)}) \leq 0$. Then, solve

$$\min_{y} f(x, y) \qquad (5a)$$

$$\text{s.t. } d(x, y) \leq 0 \qquad (5b)$$

$$x = x^{(v)} : \lambda^{(v)} \qquad (5c)$$

Expressions (5a) - (5c) represent a subproblem. The solution of the subproblem provides corresponding values on the non-complicating dual variable of the fixed variables, namely the sensitivity vector $\lambda^{(v)}$. The subproblem is more constrained than the original problem and provides an upper bound to the original objective. It should be noted that one or more subproblems may be formulated for a master problem.

If function $\alpha(x)$ is convex, the following problem produces a lower bound to the original objective

$$\min_{\alpha, x} \alpha \qquad (6a)$$

$$\text{s.t. } c(x) \leq 0 \qquad (6b)$$

$$\alpha \geq f\left(x^{(v)}, y^{(v)}\right) + \sum_{k=1}^{n} \lambda_k^{(v)}\left(x_k - x_k^{(v)}\right)$$

Expressions (6a) - (6c) represent the master problem that corresponds to a relaxation of the original problem.

Each solve of the master problem can provide its solved complicating variable as an input to the subproblem, which in turn provides another Benders cut to the master problem. This iterative procedure continues until lower and upper bound are sufficiently close to each other.

As detailed above, each master problem $MP_i$ of the plurality of master problems is based on a different slack weight $w_i$ of a plurality of slack weights. While the plurality of slack weights can generally be set in any appropriate manner, effective setting of the plurality of slack weights contributes significantly to improved computation times and reduced computational complexity.

In preferred embodiments, for an iteration of the Benders decomposition, some or all slack weights $w_i$ of the plurality of slack weights lie within a predefined range. The spacing of the slack weights $w_i$ within the range is preferably based on a logarithmic function such as, e.g., a logspace function. The upper limit and lower limit of that range can be defined by an initial slack weight w that can be appropriately set, and a spread s. As an example, for an iteration of the Benders decomposition, a plurality of slack weights may comprise or substantially consist of the following slack weights:

$$w_1 \leftarrow sw \qquad\qquad (7)$$

$$w_2 \leftarrow 10^{0.5(log_{10}(w) + \log_{10}(sw))}$$

$$w_3 \leftarrow w$$

$$w_4 \leftarrow 10^{0.5\left(log_{10}(w) + log_{10}(sw)\right)}$$

$$w_5 \leftarrow \frac{w}{s}$$

wherein $s \geq 0$.

It should be noted that the number of slack weights is not limited to 5, and that the above example can readily expanded by the skilled person to more or less slack weights.

Each master problem $MP_i$ based on slack weight $w_i$ is then solved to obtain its respective slack variable $l_i$ as described within the context of expressions (2a) - (6c).

In step **S120,** slack weight selection is performed. For this, it is determined whether slack variables $l_i$ respectively obtained by solving respective master problems $MP_i$ satisfy a first predetermined condition. Here it was found that at a certain slack weight, a further increase in slack weight is met with diminishing returns, i.e., a reduced decrease in slack variable. It was found that it is optimal to select a slack weight where slack variables begin to plateau for different slack weights. Therefore, in preferred embodiments, a respective slack weight $w_i$ is selected when a relative or absolute difference between its corresponding slack variable $l_i$ and the corresponding slack variable $l_{i+1}$ of the neighboring larger slack weight $w_{i+1}$ is below a predefined threshold. Generally, the first predetermined condition can be checked as follows:

$$\text{if } l_i < \beta \cdot l_{i+1}, \text{then } w \leftarrow w_i; \qquad\qquad (8)$$

$$\text{else if } l_{i+1} < \beta \cdot l_{i+2}, \text{then } w \leftarrow w_{i+2};$$

$$...$$

$$\text{else } w \leftarrow w_k;$$

$$\text{end if}$$

$$s \leftarrow \gamma s,$$

wherein $w, s, \beta, \gamma \geq 0$, and wherein $k$ is the total number of slack weights $w_i$ and is preferably an odd number. Parameter $\beta$ is a scalar factor that is in a range of 0 to 5, preferably in a range of 0.1 to 0,4, more preferably in a range of 0.2 to 0.3, most preferably 0.25. Setting $k$ as an odd number can prevent that slack weight selection between subsequent iterations of the Benders decomposition oscillates between two slack weights. By setting an appropriate value for $\beta$, sudden decreases in slack variable with increasing slack weights can be determined. By appropriately setting both $k$ and $\beta$, slack weight selection can be performed with improved computation times. The parameter $\gamma$ is set at less than one, so that the spread s becomes smaller for each subsequent iteration of the Benders decomposition. When the spread s becomes less or equal to one, no further slack weight selection and adjustment is performed.

In the exemplary case of five slack weights, the above described first predetermined condition can be checked as follows:

$$\text{if } l_1 < \beta l_2 \text{ then} \tag{9}$$

$$w \leftarrow w_1;$$

$$\text{else if } l_2 < \beta l_3 \text{ then}$$

$$w \leftarrow w_2;$$

$$\text{else if } l_3 < l_4 \text{ then}$$

$$w \leftarrow w_3;$$

$$\text{else if } l_4 < \beta l_5 \text{ then}$$

$$w \leftarrow w_4;$$

$$\text{else}$$

$$w \leftarrow w_5;$$

$$\text{end if}$$

$$s \leftarrow \gamma s.$$

In step **S130,** the selected slack weight $w_i$ and corresponding slack variable $l_i$ are provided as inputs to the one or more subproblems as detailed above.

In step **S140,** the one or more subproblems as described above within the context of expressions (2a) - (6c) are solved. Notably, some or all of the one or more subproblems may be based on one of reactive power constraints of one or more buses of the power network, voltage constraints of one or more branches of the power networks, slack variables of the one or more subproblems, and/or an *N-1* security criterion.

In step **S150,** it is determined whether a second predetermined condition is met. If the second predetermined condition is met, the solutions of the one or more subproblems are provided as inputs into each master problem $MP_i$ of the subsequent iteration of the Benders decomposition. In preferred embodiments, the second predetermined condition is met when a predetermined number of iterations of the Benders decomposition is below a predefined threshold. Additionally, or alternatively, the second predetermined condition is met when, in an iteration, a difference between a lower bound, provided by the solution of the master problem corresponding to the selected slack weight of step S130, and one or more upper bounds, provided by the one or more solutions determined for the one or more subproblems in step S140, is above a predefined threshold.

In case a subsequent iteration of steps 110 to S140 are performed, the initial slack weight w for determining a plurality of slack weights, as described for step S120, corresponds to the slack weight $w_i$ selected in step S120 of the previous iteration of the Benders decomposition. Here, it is to be noted that the number of iterations required for the Benders decomposition may be larger than the number of iterations, in which slack weight selection and adjustment according to step S120 is performed. For example, the condition

$$\text{end if}$$

$$s \leftarrow \gamma s,$$

of expression (9) above may be met after a certain number of iterations, while the Benders decomposition requires further iterations. In such a case, for these further iterations, no slack weight selection and adjustment according to step S120 is performed, and last selected slack weight $w_i$ is maintained as the final slack weight $w_f$ throughout the further iterations.

Steps S110 to S150 can be performed in parallel. OPF typically comprises a plurality of subproblems, each of which is typically assigned and processed using parallel computing capabilities for step S140. For example, a plurality of subproblems may be assigned to a plurality of processing units. Since the plurality of processing units remains assigned for each iteration of the Benders decomposition, determining and solving the plurality of master problems $MP_i$ as well as selecting a slack weight $w_i$ and slack variable $l_i$ in steps S110 to S130 may be performed in parallel using the already assigned plurality of processing units prior to step S140, i.e., during a time when the one or more subproblems are not being processed.

Each master problem $MP_i$ may be based on more than one type of slack weight $w_i$. In such a case, per iteration of the Benders decomposition, slack weight selection as described in step S130 may be performed only for one type of slack weight, wherein slack weight selection is performed sequentially for a different type of slack weight for each iteration of the Benders decomposition. For example, the SCOPF may comprise, as a first type, a plurality of slack weights $w_i^p$ for power balance slack, and, as a second type, a plurality of slack weights $w_i^c$ for current limit slack, as described within the context of expression (1a). In such a case, each iteration of the Benders decomposition preferably selects and adjusts only one of slack weights $w_i^p$ and $w_i^c$ per iteration as exemplified within the context of expressions (7) and (8) above, preferably in an alternating fashion.

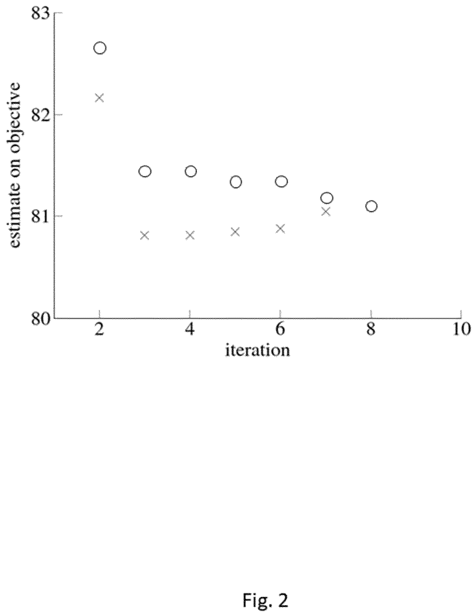

**Fig. 2** shows a plot illustrating the change of the upper bounds and lower bounds per iteration of the Benders decomposition for an exemplary case, as described within the context of step S150 of Fig. 1. As can be seen, for each iteration, the difference between upper bound and lower bound decreases. Here, the difference may be an absolute or preferably a relative difference between upper bound and lower bound. Since slack weights are selected and adjusted for each iteration of the Benders decomposition, it can occur that the lower bound of a previous iteration is larger than an upper bound of a subsequent iteration of the Benders decomposition. In the plot illustrated in Fig. 2, this can be observed for the lower bound of iteration 2 and the upper bounds of iterations 3 to 8.

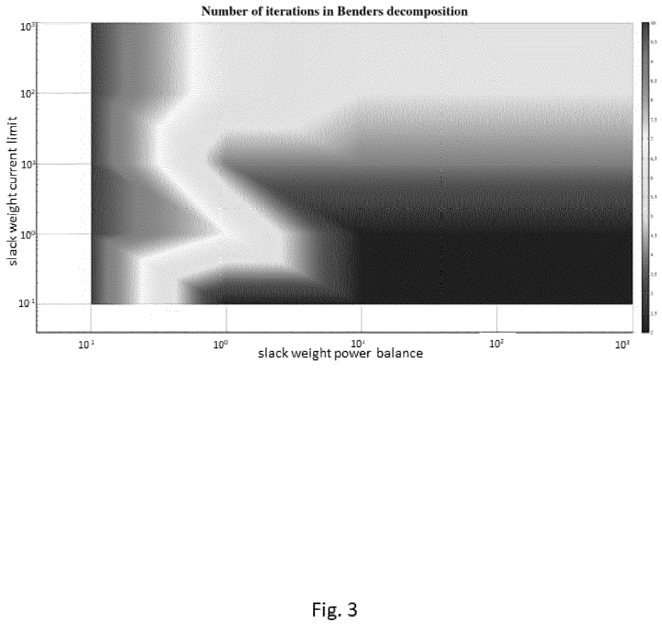

**Figs. 3 to 8** illustrate the performance of methods of the present disclosure compared to Benders decomposition methods of the prior art, i.e., without slack weight selection and adjustment. The performance of methods of the present disclosure is illustrated below for an example case 1 and an example case 2. The two example cases exhibit two main distinctive properties: Example case 2 does not allow for a solution with hard constraints, and only allows a soft solution with non-zero slack variables, while example case 1 allows for a solution with zero-slack variables.

Example case 1 comprises 1354 buses with a single contingency, i.e., failure of a single element of the power network. Example case 1 was analysed with 25 different slack weight configurations. Merely for illustrative purposes, a power balance slack weight $w_i^p$ and a current limit slack weight $w_i^c$ were each limited to 5 different possible values 0.1, 1, 10, 100, and 1000 throughout performing the method of the present disclosure. The maximum number of iterations of the Benders decomposition was set at 15.

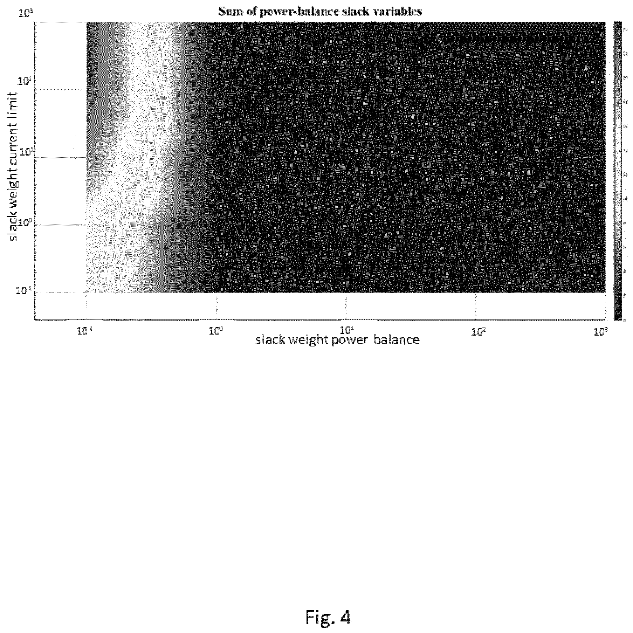

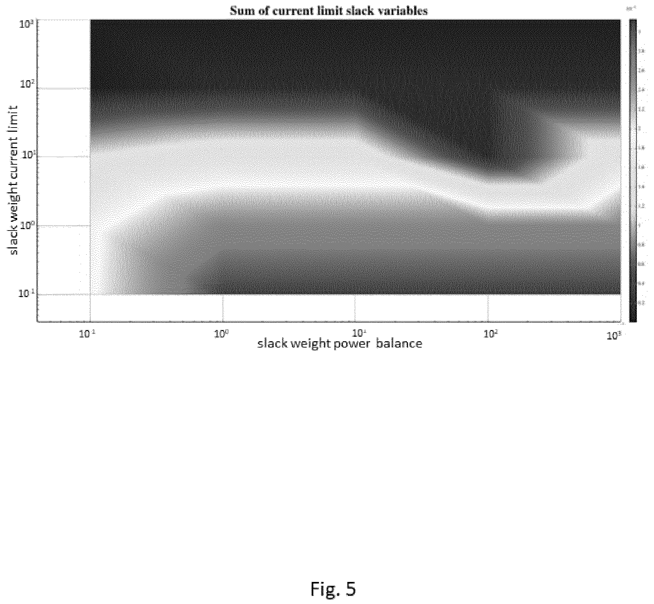

The resulting number of iterations in Benders decomposition is shown in Fig. 3, the sum of power-balance slack weights for the selected master problem is shown in Fig. 4, and the sum of current limit slack weights for the selected master problem is shown in Fig. 5.

Using an example weight setting 1 with initial weight settings ($w^p$ = 0.1, $w^c$ = 0.1), Benders decomposition according to the prior art requires 11 iterations, has a power-balance slack of 13.7 and current limit slack of 0.019 . Using the slack selection and adjustment as described above within the context of embodiments of Fig. 1, notably steps S120, S130, and S140, slack weights in the first iteration are adjusted to ($w^p$ = 1.0, $w^c$ = 0.1), and the second iteration to ($w^p$ = 1.0, $w^c$ = 0.001) before termination of the Benders decomposition. Therefore, with a method of the present disclosure as described within the context of Fig. 1, using slack selection and adjustment, only two iterations of the Benders decomposition are required, and the resulting power-balance slack is 0 and the current limit slack is 0.0315. The obtained solution thus has lower computation times with no power-balance violation, i.e. zero slack, and only a small increase in current limit slack.

Using an example weight setting 2 with initial weight settings ($w^p$ = 0.1, $w^c$ = 1000), the Benders decomposition according to the prior art requires 15 iterations, has a power balance slack of 24.6 and current limit slack of 0.000044 . With a method of the present disclosure as described within the context of Fig. 1, weights in the first iteration are adjusted to ($w^p$ = 1.0, $w^c$ = 1000), to ($w^p$ = 1.0, $w^c$ = 100000) in the second iteration, followed by ($w^p$ = 3.16, $w^c$ = 100000) in the third iteration and ($w^p$ = 3.16, $w^c$ = 31622) in the fourth iteration. In total, five iterations are required, and the slacks are zero for both the power balance and current limits. The obtained solution thus has lower computation times with no power-balance violation and current limit violation.

Using an example weight setting 3 with initial weight settings ($w^p$ = 100, $w^c$ = 1000), the Benders decomposition according to the prior art requires 5 iterations, has a power balance slack of 0 and current limit slack of 0.000044. With a method of the present disclosure as described within the context of Fig. 1, weights in the first iteration are adjusted to ($w^p$ = 1.0, $w^c$ = 1000), to ($w^p$ = 1.0, $w^c$ = 100000) in the second iteration, followed by ($w^p$ = 3.16, $w^c$ = 100000) in the third iteration and ($w^p$ = 3.16, $w^c$ = 31622) in the fourth iteration. In total, five iterations are required, and the slacks are zero for both the power balance and current limits. As can be seen, the same solution was obtained as in example weight setting 2, although initial weights were different. This is beneficial since an overall zero slack with a low number of required iterations is the optimal outcome.

Example case 2 comprises 300 buses with a single contingency, i.e., failure of a single element of the power network. Example case 2 was analysed with 25 different slack weight configurations. Merely for illustrative purposes, a power balance slack weight $w_i^p$ and a current limit slack weight $w_i^c$ were each limited to 5 different possible values 0.1, 1, 10, 100, and 1000 throughout performing the method of the present disclosure. The maximum number of iterations of the Benders decomposition was set at 15.

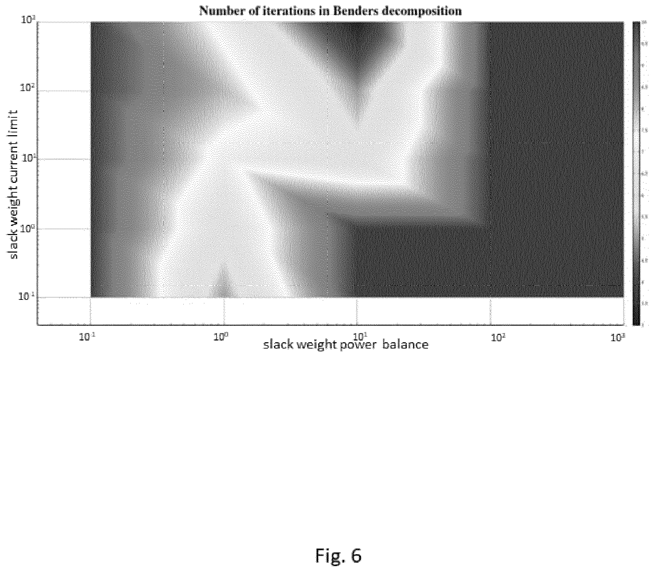

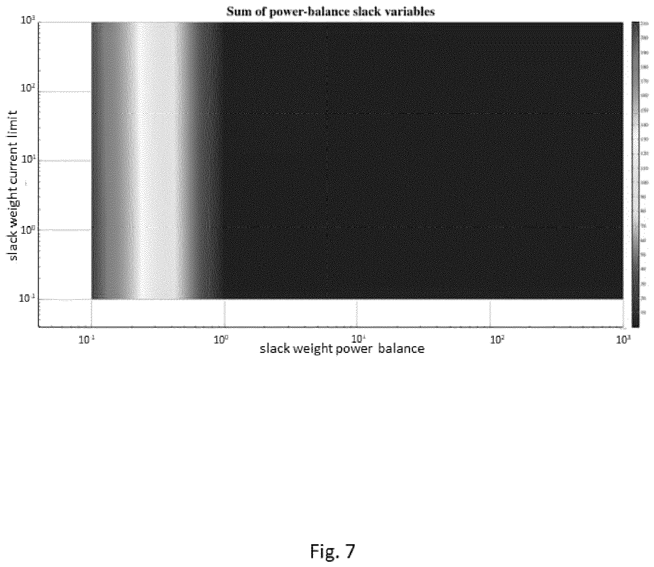

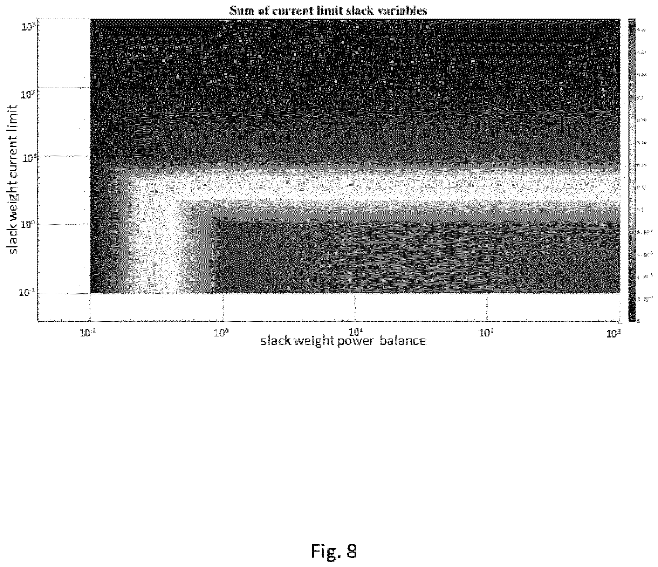

The resulting number of iterations in Benders decomposition is shown in Fig. 6. Here, it can be observed that the number of iterations increases both for small as well as large slack weights. This indicates that a solution with hard constraints does not exist. The sum of power-balance slack weights for the selected master problem is shown in Fig. 7 and the sum of current limit slack weights for the selected master problem is shown in Fig. 8.

Using an example weight setting 1 with initial weight settings ($w^p = 0.1, w^c = 0.1$), the Benders decomposition according to the prior art requires 15 iterations, i.e. it has reached the maximum number of allowed iterations, has a power-balance slack of 211 and current limit slack of 0. With a method of the present disclosure as described within the context of Fig. 1, weights in the first iteration are adjusted to ($w^p = 1.0, w^c = 0.1$) in the first iteration, then to ($w^p = 1.0, w^c = 10$) in the second iteration. In the third iteration, the weights remain unchanged, but are adjusted to ($w^p = 1.0, w^c = 31.6$) in the fourth iteration. In total, seven iterations are required, and the resulting slack for power balance is 0.35 and for the current limit 0.021. The method according to the present disclosure thus remedies two serious drawbacks of this weight setting compared to the prior art: the large power balance slack and the large number of iterations.

Using an example weight setting 2 with initial weight settings ($w^p = 10, w^c = 1000$), the Benders decomposition according to the prior art requires 7 iterations, has a power-balance slack of 1.09 and current limit slack of 0. Here, the weight setting is well-attuned, and can be used as a test to check that the solution obtained by the method according to the present disclosure does not move away from a beneficial configuration. With a method of the present disclosure as described within the context of Fig. 1, weights in the first iteration remain unchanged, and are adjusted to ($w^p = 10, w^c = 100$) in the second iteration. No further adjustment occurs after that. In total, five iterations are required, and the resulting slack for power balance is 0.09 and zero for the current limit. The obtained solution thus has lower computation times with no power-balance violation and no current limit violation. The method according to the present disclosure thus maintains a beneficial configuration and further reduces the power balance slack while keeping zero slack for the current limit.

Using an example weight setting 3 with initial weight settings ($w^p = 1000, w^c = 1000$), the Benders decomposition according to the prior art requires 15 iterations, has a power balance slack of 0.029 and current limit slack of 0. As evident, the slack weights are too large and result in a high number of iterations. With a method of the present disclosure as described within the context of Fig. 1, weights in the first iteration are adjusted to ($w^p = 10, w^c = 1000$) in the first iteration, and to ($w^p = 10, w^c = 100$) in the second iteration. In the third iteration, the weights are adjusted to ($w^p = 3.16, w^c = 100$) and then remain there. In total, eight iterations are needed, and the resulting slack for power balance is 0.16 and zero for the current limit. The method according to the present disclosure thus allows more room to violations of the power balance which results in much lower computation times at the expense of a slightly larger power balance slack.

A method according to any one of the above described embodiments of the present disclosure may be performed using any suitable computing device or system. Preferably, such devices include devices and systems with parallel computing capabilities, such as, e.g., a distributed computing system or a could computing environment.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein but is to be accorded the widest scope consistent with the novel features and principles disclosed herein, as recited in the claims below.

### List of references

[1] J. K. Skolfield and A. R. Escobedo, "Operations research in optimal power flow: A guide to recent and emerging methodologies and applications," European Journal of Operational Research, vol. 300, no. 2, pp. 387-404, 2022.

[2] G. Tognola and R. Bacher, "Unlimited point algorithm for opf problems," in Proceedings of the 20th International Conference on Power Industry Computer Applications, pp. 149-155, 1997.

[3] M. Nick, Exact Convex Modeling of the Optimal Power Flow for the Operation and Planning of Active Distribution Networks with Energy Storage Systems, PhD thesis, 2016.

[4] A. J. Conejo, E. Castillo, R. Minguez, and R. Garcia-Bertrand, Decomposition Techniques in Mathematical Programming, 2006.

### Claims

1. A computer-implemented method for optimizing power generation in a power network using Benders decomposition, the method comprising performing one or more iterations of the following steps:

   a) determining a solution for each master problem, $MP_i$, of a plurality of master problems, wherein each $MP_i$ is based on a different slack weight, $w_i$, of a plurality of slack weights;
   b) selecting a slack weight $w_i$ based on a first predetermined condition;
   c) selecting the solution for the $MP_i$ that corresponds to the selected $w_i$ as an input for one or more subproblems;

d) determining one or more solutions for the one or more subproblems; and

e) when a second predetermined condition is met, inputting the determined one or more solutions of the one or more subproblems of step d) into each MP, of step a) of the subsequent iteration.

2. The computer-implemented method according to the preceding claim, wherein

the plurality of slack weights comprises or substantially consist of slack weights $w_i$ that lie within a slack weight range between a lower limit and an upper limit respectively defined by an initial slack weight, w, and a spread factors; and

for subsequent iterations of steps a) to e), initial slack weight w corresponds to the slack weight $w_i$ selected in step b) of the previous iteration.

3. The computer-implemented method according to the preceding claim, wherein, in b), a respective slack weight $w_i$ is chosen when a relative or absolute difference between its corresponding slack variable $l_i$ and the corresponding slack variable $l_{i+1}$ of the neighboring larger slack weight $w_{i+1}$ is below a predefined threshold.

4. The computer-implemented method according to any one of claims 2 to 3, wherein the plurality of slack weights comprises or substantially consists of slack weights $w_i$ that are spaced according to a predetermined rule.

5. The computer-implemented method according to any one of claims 2 to 4, wherein the plurality of slack weights comprises the following slack weights:

$$w_1 \leftarrow sw$$

$$w_2 \leftarrow 10^{0.5(log_{10}(w)+\log_{10}(sw))}$$

$$w_3 \leftarrow w$$

$$W_4 \leftarrow 10^{0.5\left(log_{10}(w)+log_{10}\left(\frac{w}{s}\right)\right)}$$

$$w_5 \leftarrow \frac{w}{s}.$$

6. The computer-implemented method according to any one of claims 1 to 5, wherein the first predetermined condition in b) is:

$$\text{if } l_i < \beta \cdot l_{i+1}, \text{then } w \leftarrow w_i;$$

$$\text{else if } l_{i+1} < \beta \cdot l_{i+2}, \text{then } w \leftarrow w_{i+2};$$

$$...$$

$$\text{else } w \leftarrow w_k;$$

wherein $k$ is the total number of slack weights $w_i$ and is preferably an odd number; and

wherein $\beta$ is a scalar factor that is in a range of 0 to 5, preferably in a range of 0.1 to 0.4, more preferably in a range of 0.2 to 0.3, most preferably 0.25.

7. The computer-implemented method according to any one of claims 1 to 6, wherein the total number k of slack weights $w_i$ of the plurality of slack weights is determined based on available parallel computing capacity.

8. The computer-implemented method according to any one of claims 1 to 7, wherein each $MP_i$ is based on a power generation effort, power balance, and current limits of the power network.

9.  The computer-implemented method according to any one of claims 1 to 8, wherein the one or more subproblems are based on one or more of:

    active power constraints of one or more buses of the power network;
    reactive power constraints of one or more buses of the power network;
    voltage constraints of one or more branches of the power networks;
    slack variables of the one or more subproblems; and/or
    an *N-1* security criterion.

10. The computer-implemented method according to any one of claims 1 to 9, wherein the second predetermined condition is met when:

    a predetermined number of iterations of steps a) to d) is below a predefined threshold; and/or
    in an iteration, a difference between a lower bound, provided by the solution of the master problem selected in c), and one or more upper bounds, provided by the one or more solutions determined for the one or more subproblems in d), is above a predefined threshold.

11. The computer-implemented method according to claim 10 and claim 2, wherein:

    for each iteration of steps a) to d), spread factor *s* is decreased by a predetermined factor; and
    when s is below a predetermined threshold, in subsequent iterations, in step a), the plurality of master problems is reduced to a single master problem with a final slack weight $w_f$ as an input to the one or more subproblems in step d), and steps b) and c) are omitted.

12. The computer-implemented method according to any one of claims 1 to 11,

    wherein the number of master problems MP, is equal to or smaller than the number of subproblems,
    wherein the one or more subproblems are allocated to one or more first computing cores,
    wherein one or more $MP_i$ of the plurality of master problems are allocated to one or more second computing cores,
    wherein the one or more first computing cores correspond to the one or more second computing cores.

13. A computing device comprising one or more processors configured to perform a method according to any one of claims 1 to 12.

14. A computer program product comprising instructions that, when executed by a computing device according to the preceding claim, cause the computing device to perform a method according to any one of claims 1 to 12.

15. A computer-readable storage medium comprising a computer program product according to claim 14.

S110

$$MP_1 \quad MP_2 \quad \cdots \quad MP_i \quad \cdots \quad MP_n$$
$$(w_1) \quad (w_2) \quad \quad (w_i) \quad \quad (w_n)$$

S120 condition 1

S130

$$MP_i$$
$$(w_i)$$

S140

$$SP_1 \quad SP_2 \quad \cdots \quad SP_i \quad \cdots \quad SP_m$$

S150 condition 2

Fig. 1

Fig. 2

**Number of iterations in Benders decomposition**

Fig. 3

Fig. 4

Fig. 5

**Number of iterations in Benders decomposition**

Fig. 6

Fig. 7

Fig. 8

Europäisches Patentamt

European Patent Office

Office européen des brevets

# EUROPEAN SEARCH REPORT

**Application Number**

EP 24 21 6666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 610 262 B (UNIV CHINA AGRICULTURAL ET AL.) 7 June 2024 (2024-06-07) * the whole document * | 1-15 | INV. G06Q10/04 G06Q50/06 |
| A | SE 1 630 214 A1 (ZHAO YUAN [SE]) 9 March 2018 (2018-03-09) * abstract * | 1-15 | |
| A | US 2024/378521 A1 (OMI SHOTA [GB] ET AL) 14 November 2024 (2024-11-14) * abstract * | 1-15 | |
| A | US 2023/324181 A1 (KINOSHITA YOSHIHITO [JP] ET AL) 12 October 2023 (2023-10-12) * abstract * | 1-15 | |
| A | US 2024/103959 A1 (MURALI PAVANKUMAR [US] ET AL) 28 March 2024 (2024-03-28) * abstract * | 1-15 | |
| A | WO 2024/142594 A1 (HITACHI LTD [JP]) 4 July 2024 (2024-07-04) * abstract * | 1-15 | TECHNICAL FIELDS SEARCHED (IPC) G06Q |
| A,P | KHALOIE HOOMAN ET AL: "Review of machine learning techniques for optimal power flow", APPLIED ENERGY., vol. 388, 7 March 2025 (2025-03-07), XP093276797, GB ISSN: 0306-2619, DOI: 10.1016/j.apenergy.2025.125637 * the whole document * | 1-15 | |

The present search report has been drawn up for all claims

| Place of search | Date of completion of the search | Examiner |
|---|---|---|
| Munich | 13 May 2025 | Weidmann, Matthias |

## ANNEX TO THE EUROPEAN SEARCH REPORT
## ON EUROPEAN PATENT APPLICATION NO.

EP 24 21 6666

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | | Publication date | Patent family member(s) | | Publication date |
|---|---|---|---|---|---|
| CN 113610262 | B | 07-06-2024 | NONE | | |
| SE 1630214 | A1 | 09-03-2018 | NONE | | |
| US 2024378521 | A1 | 14-11-2024 | EP | 4462328 A1 | 13-11-2024 |
| | | | JP | 2024163019 A | 21-11-2024 |
| | | | US | 2024378521 A1 | 14-11-2024 |
| US 2023324181 | A1 | 12-10-2023 | EP | 4246414 A1 | 20-09-2023 |
| | | | JP | 7449217 B2 | 13-03-2024 |
| | | | JP | 2022078722 A | 25-05-2022 |
| | | | TW | 202221626 A | 01-06-2022 |
| | | | US | 2023324181 A1 | 12-10-2023 |
| | | | WO | 2022102199 A1 | 19-05-2022 |
| US 2024103959 | A1 | 28-03-2024 | NONE | | |
| WO 2024142594 | A1 | 04-07-2024 | JP | 2024095064 A | 10-07-2024 |
| | | | WO | 2024142594 A1 | 04-07-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. K. SKOLFIELD** ; **A. R. ESCOBEDO**. Operations research in optimal power flow: A guide to recent and emerging methodologies and applications. *European Journal of Operational Research*, 2022, vol. 300 (2), 387-404
- **G. TOGNOLA** ; **R. BACHER**. Unlimited point algorithm for opf problems. *Proceedings of the 20th International Conference on Power Industry Computer Applications*, 1997, 149-155

- **M. NICK**. Exact Convex Modeling of the Optimal Power Flow for the Operation and Planning of Active Distribution Networks with Energy Storage Systems. *PhD thesis*, 2016
- **A. J. CONEJO** ; **E. CASTILLO** ; **R. MINGUEZ** ; **R. GARCIA-BERTRAND**. Decomposition Techniques. *Mathematical Programming*, 2006